# EUROPEAN PATENT APPLICATION

(11) **EP 3 766 323 A1**
(43) Date of publication of application: **20.01.2021**
(21) Application number: 19768633.0
(22) Date of filing: 05.02.2019
(51) Int. Cl.: A01B 69/00, A01C 11/02, G05D 1/02

(54) **AUTOMATIC TRAVELING SYSTEM**

(30) Priority: 15.03.2018 JP 2018048449
(71) Applicant: Yanmar Power Technology Co., Ltd., Osaka-shi Osaka 530-8311 (JP)
(72) Inventor: UEDA, Ryohei, Osaka-shi, Osaka 530-8311 (JP); NISHII, Yasuto, Osaka-shi, Osaka 530-8311 (JP)
(74) Representative: Poindron, Cyrille
(86) International application number: PCT/JP2019/004095
(87) International publication number: WO 2019/176383

(57) **Abstract**

An automatic traveling system causes an agricultural work machine to automatically travel a first route and a second route in sequence, wherein the agricultural work machine supplies supply material to the first route and the second route while traveling along a travel route that is set in a field and comprises the first route formed by connecting a first start point and a first end point and the second route formed by connecting a second start point and a second end point. The automatic traveling system includes a correction route generation unit that generates a corrected travel route in which the second start point and the second end point are switched when a prescribed condition is satisfied after the agricultural work machine automatic travel is aborted before entering the second route, and before the agricultural work machine automatic travel restarts on the second route.

## Description

### TECHNICAL FIELD

The present invention relates to an automatic traveling system.

### BACKGROUND ART

Regarding the field work machine of Patent Literature 1 below, in a case of performing an agricultural work in a field, the travel route calculation unit calculates a travel route that is suitable for the agricultural work. Then, the field work machine performs the agricultural work while traveling along this travel route. Specifically, the field work machine travels straight from a work start point to reach a work end point while performing the agricultural work in an inner area surrounded by a headland. Further, the field work machine makes a turn by 180° at the headland to reach the next work start point that is next to the previous work end point, then travels straight from that next work start point to reach the next work end point. By repeating this, the agricultural work is performed in the entire inner area.

### CITATION LIST

### Patent Literature

Patent Literature 1: Japanese Unexamined Patent Application Publication No. 2015-112071

### DISCLOSURE OF INVENTION

### PROBLEMS TO BE SOLVED BY THE INVENTION

Since the field work machine disclosed in Patent Literature 1 travels on a travel route while supplying materials needed for an agricultural work on the travel route, there is such a case in which the remaining amount of materials runs short during the time of traveling on the travel route. In this case, the field work machine needs to suspend the agricultural work, get replenished with materials at a predetermined replenishment position that is outside the travel route, and then return to the suspended position where the agricultural work was suspended.

On the other hand, unlike the field work machine of Patent Literature 1, as for a field work machine that travels on a travel route while harvesting agricultural products, in a case where a crop storage unit for storing agricultural products becomes full while traveling on the travel route, it is necessary to suspend the agricultural work, unload the agricultural products at a predetermined unloading position outside the travel route, and then return to the suspended position.

Depending on the positional relationship between the suspended position and the replenishment position (unloading position), the distance for the field work machine to reciprocate between the suspended position and the replenishment position (unloading position) increases, which may cause an increase in the fuel and time needed for finishing the entire procedure of the agricultural work.

Therefore, the main object of the present invention is to provide an automatic traveling system for reducing the distance for an agricultural work machine to travel in a field.

### MEANS FOR SOLVING THE PROBLEMS

An embodiment of the present invention is to provide an automatic traveling system for causing an agricultural work machine to automatically travel on a first path and a second path in sequence, the agricultural work machine being configured to supply a supply material to the first path and the second path while traveling along a travel route that is set in a field and includes the first path formed by connecting a first start point and a first end point and the second path formed by connecting a second start point and a second end point, the automatic traveling system including: a corrected route generation unit configured to generate a corrected travel route, on which the second start point and the second end point are switched, in a case where a predetermined condition is satisfied, after automatic traveling of the agricultural work machine is suspended, prior to entrance into the second path, and before the automatic traveling of the agricultural work machine is re-started for the second path.

In a case of such a situation in which the agricultural work machine needs to head to the replenishment position for replenishment of the supply material, the agricultural work machine needs to move to the second start point after the agricultural work machine reaches the replenishment position, in order to re-start the work. Therefore, in a case where the moving distance for the agricultural work machine to travel from the replenishment position to the second end point is shorter than the moving distance for the agricultural work machine to travel from the replenishment position to the second start point, it is possible to reduce the moving distance for the agricultural work machine by switching the second start point and the second end point of the current travel route. Therefore, with such a configuration that is capable of generating a travel route of which the second start point and the second end point are switched, it is possible to reduce the distance for the agricultural work machine to travel in the field.

In an embodiment of the present invention, the predetermined condition is that a distance between a replenishment position, at which the agricultural work machine is replenished with the supply material, and the second end point is shorter than a distance between the replenishment position and the second start point.

According to this configuration, in a case where the distance between the replenishment position and the second end point is shorter than the distance between the replenishment position and the second start point, there is a high possibility that the moving distance for the agricultural work machine to travel from the replenishment position to the second end point is shorter than the moving distance for the agricultural work machine to travel from the replenishment position to the second start point. In such a case, it is possible to reduce the distance for the agricultural work machine to travel in the field by controlling the route generation unit to generate a travel route of which the second start point and the second end point are switched.

In an embodiment of the present invention, the automatic traveling system further includes an automatic traveling control unit configured to cause the agricultural work machine to automatically travel on the first path and the second path. Further, in a case where the agricultural work machine reaches the first end point, the automatic traveling control unit suspends the automatic traveling of the agricultural work machine.

According to this configuration, the automatic traveling of the agricultural work machine is suspended every time the agricultural work machine reaches the first end point. Therefore, every time the agricultural work machine reaches the first end point, the user can determine whether or not replenishment of the supply material is necessary. Accordingly, it is possible to prevent occurrence of such a situation in which the remaining amount of the supply material runs out while the agricultural work machine is traveling on the first path or the second path.

In an embodiment of the present invention, the automatic traveling system further includes an automatic traveling control unit configured to cause the agricultural work machine to automatically travel on the first path and the second path. Further, in a case where an amount of the supply material remaining on the agricultural work machine when the agricultural work machine reaches the first end point is less than a predetermined threshold value, the automatic traveling control unit suspends the automatic traveling of the agricultural work machine.

According to this configuration, the automatic traveling of the agricultural work machine is suspended in a case where the amount of the supply material remaining on the agricultural work machine is less than a predetermined threshold value when the agricultural work machine reaches the first end point. Since the user can recognize the proper timing for replenishment of the supply material because of the suspension of the automatic traveling, it is possible that the agricultural work machine is replenished with the supply material at an appropriate timing. Therefore, it is possible to further prevent occurrence of such a situation in which the remaining amount of the supply material runs out while the agricultural work machine is traveling on the first path or the second path. Additionally, the time required for the agricultural work can be reduced, compared to such a case in which automatic traveling of the agricultural work machine is suspended every time the agricultural work machine reaches a first end point.

In an embodiment of the present invention, the automatic traveling system further includes an automatic traveling control unit configured to cause the agricultural work machine to automatically travel on the first path and the second path. Further, in a case where an amount of the supply material remaining on the agricultural work machine is less than an amount of the supply material consumed on the first path, the automatic traveling control unit suspends the automatic traveling of the agricultural work machine.

According to this configuration, the automatic traveling of the agricultural work machine is suspended in a case where the amount of the supply material remaining on the agricultural work machine is less than the amount of the supply material consumed on the first path. Since the user can recognize the proper timing for replenishment of the supply material because of the suspension of the automatic traveling, replenishment of the supply material can be performed at an appropriate timing. Therefore, it is possible to further prevent occurrence of such a situation in which the remaining amount of the supply material runs out while the agricultural work machine is traveling on the first path or the second path. Additionally, the time required for the agricultural work can be reduced, compared to such a case in which automatic traveling of the agricultural work machine is suspended every time the agricultural work machine reaches a first end point.

Furthermore, even in a case where the consumption amount of the supply material on the first path is higher than expected, it is possible to accurately grasp the remaining amount of the supply material.

Another embodiment of the present invention is to provide an automatic traveling system for causing an agricultural work machine to automatically travel on a first path and a second path in sequence, the agricultural work machine being configured to harvest an agricultural product on the first path and the second path while traveling along a travel route that is set in a field and includes the first path formed by connecting a first start point and a first end point and the second path formed by connecting a second start point and a second end point, the automatic traveling system including: a corrected route generation unit configured to generate a corrected travel route, on which the second start point and the second end point are switched, in a case where a predetermined condition is satisfied, after automatic traveling of the agricultural work machine is suspended, prior to entrance into the second path, and before the automatic traveling of the agricultural work machine is re-started for the second path.

In a case of such a situation in which the agricultural work machine needs to head to an unloading position for unloading the agricultural product harvested by the agricultural work machine, the agricultural work machine needs to move to the second start point after reaching the unloading position, in order to re-start the work. Therefore, in a case where the moving distance for the agricultural work machine to travel from the unloading position to the second end point is shorter than the moving distance for the agricultural work machine to travel from the unloading position to the second start point, it is possible to reduce the moving distance for the agricultural work machine by switching the second start point and the second end point of the current travel route. Therefore, with such a configuration that is capable of generating a travel route of which the second start point and the second end point are switched, it is possible to reduce the distance for the agricultural work machine to travel in the field.

The above and/or other objects, characteristics and effects of the present invention will be made clear by the explanations of the embodiments below with reference to the accompanying drawings.

### BRIEF DESCRIPTION OF DRAWINGS

FIG. 1 is a side view of a transplanter according to the automatic traveling system of the first embodiment of the present invention.
FIG. 2 is a plan view of the transplanter.
FIG. 3 is a schematic diagram for explaining how the transplanter travels inside the field.
FIG. 4 is a block diagram illustrating an electrical configuration of the transplanter.
FIG. 5 is a block diagram illustrating an electrical configuration of a wireless communication terminal that communicates with the transplanter.
FIG. 6A is a schematic diagram for explaining how the transplanter operates in the field before and after replenishment of a supply material.
FIG. 6B is a schematic diagram for explaining how the transplanter operates in the field before and after replenishment of a supply material.
FIG. 6C is a schematic diagram for explaining how the transplanter operates in the field before and after replenishment of a supply material.
FIG. 7 is a flowchart for explaining an example of corrected route generation processing performed by a corrected route generation unit included in the transplanter.
FIG. 8 is a schematic diagram for explaining how the transplanter according to the second embodiment of the present invention travels in the field.
FIG. 9A is a schematic diagram for explaining how the transplanter according to the second embodiment operates in the field before and after replenishment of a supply material.
FIG. 9B is a schematic diagram for explaining how the transplanter according to the second embodiment travels in the field for replenishment of a supply material.
FIG. 10 is a flowchart for explaining an example of automatic traveling control processing performed by an automatic traveling control unit included in the transplanter according to the second embodiment.
FIG. 11 is a flowchart for explaining an example of automatic traveling control processing performed by an automatic traveling control unit included in the transplanter according to the third embodiment.
FIG. 12 is a flowchart for explaining an example of automatic traveling control processing performed by an automatic traveling control unit included in the transplanter according to the fourth embodiment.
FIG. 13 is a schematic diagram for explaining an example of a corrected travel route in a case where generation of a corrected travel route is performed twice.

### DESCRIPTION OF EMBODIMENTS

### <First Embodiment>

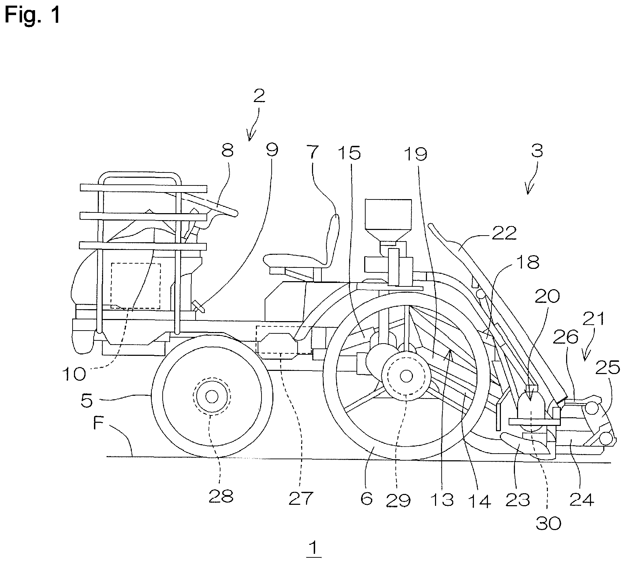

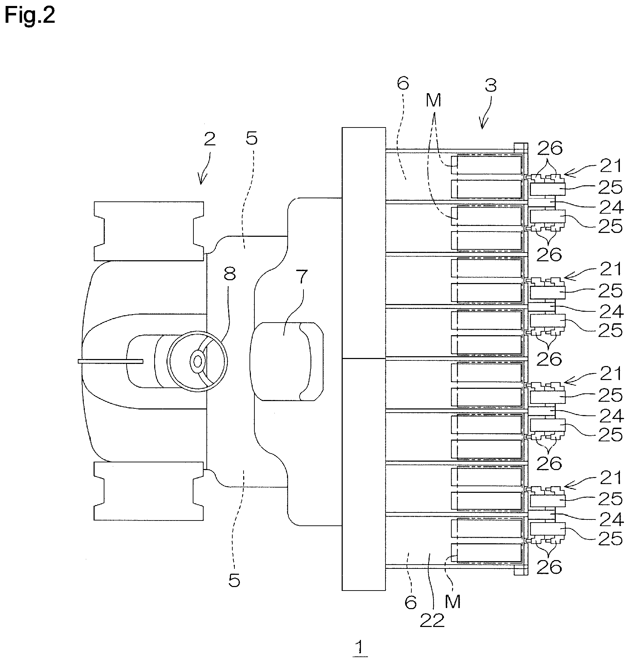

FIG. 1 is a side view of the transplanter 1 according to the automatic traveling system of the first embodiment of the present invention. FIG. 2 is a plan view of the transplanter 1.

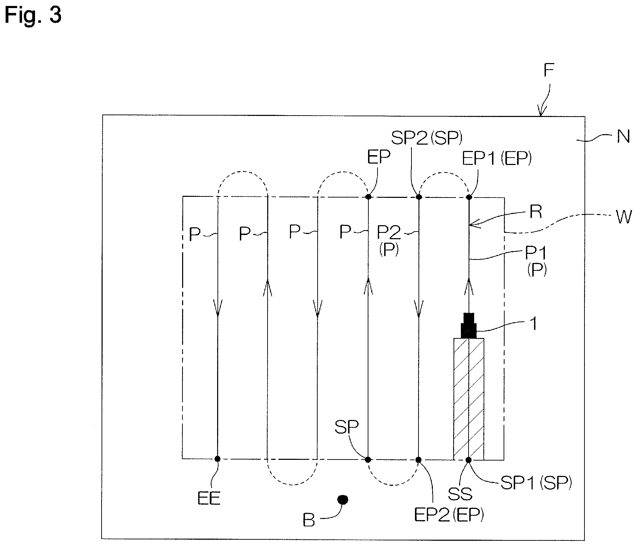

Referring to FIG. 1 and FIG. 2, the transplanter 1 performs a planting work for planting seedlings on the ground of the field F while traveling in the field F (see also FIG. 3). The transplanter 1 includes a travel machine body 2 and a planting section 3 that is arranged on the rear side of the travel machine body 2. The travel machine body 2 includes a pair of left and right front wheels 5 and a pair of left and right rear wheels 6 and is capable of traveling with driving force by the engine 10.

The travel machine body 2 includes a transmission 27, a front axle 28, and a rear axle 29. The transmission 27 transforms the power from the engine 10 to transmit the power to the front axle 28 and the rear axle 29. The front axle 28 transmits the power input from the transmission 27 to the front wheels 5. The rear axle 29 transmits the power input from the transmission 27 to the rear wheels 6.

The travel machine body 2 includes a driver's seat 7 for the user to board, a steering handle 8 for steering the travel machine body 2, and a gearshift pedal 9 for adjusting the traveling speed of the travel machine body 2.

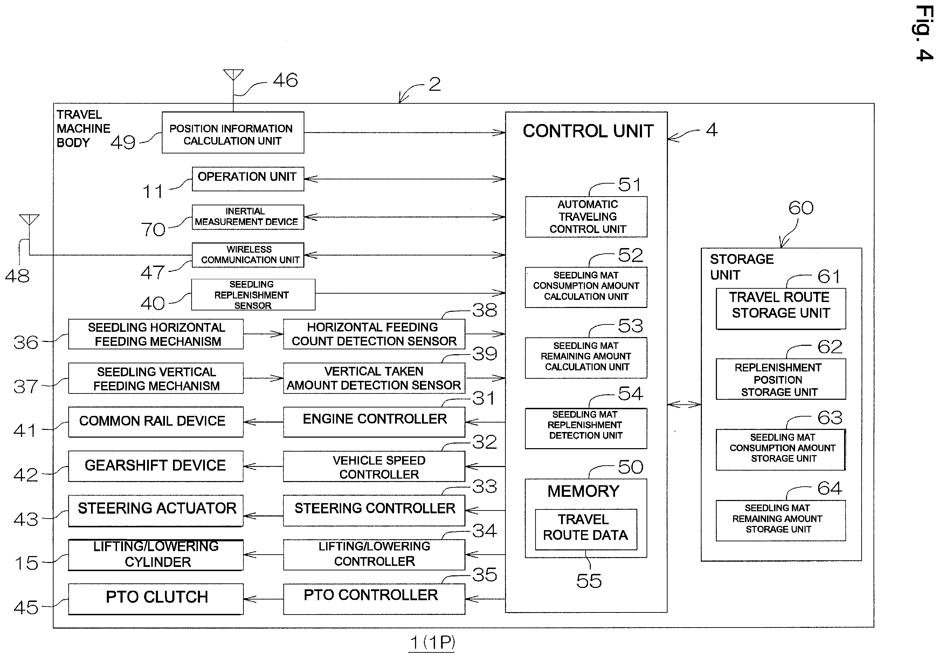

In the vicinity of the steering handle 8, an operation unit 11 (see FIG. 4, which is to be described later) for the user to perform various kinds of operations is provided. The operation unit 11 includes a speed setting dial, a touchscreen display, etc. The speed setting dial is a dial that is operated for adjusting the upper limit of the traveling speed. The traveling speed of the transplanter 1 is adjusted by the pressing amount of the gearshift pedal 9 within the range that does not exceed the upper limit of the traveling speed.

The planting section 3 is connected to the rear side of the travel machine body 2 via a lifting/lowering link mechanism 13. At the rear part of the travel machine body 2, there are arranged a PTO shaft 14 for outputting the driving force of the engine 10 to the planting section 3 and a lifting/lowering cylinder 15 for driving the planting section 3 to be lifted or lowered. The driving force of the engine 10 is transmitted to the PTO shaft 14 via the transmission 27.

The lifting/lowering link mechanism 13 is configured with a parallel link structure including a top link 18 and a lower link 19. To the lower link 19, the lifting/lowering cylinder 15 is connected. By expanding and contracting the lifting/lowering cylinder 15, the entire planting section 3 can be lifted and lowered up and down.

The planting section 3 includes multiple (four in the present embodiment) planting units 21 for planting seedlings on the ground, a planting input case 20 for driving the planting units 21, a seedling mounting table 22 on which seedling mats M (see the dashed-two-dotted line in FIG. 2) are mounted, and multiple floats 23 for leveling the ground before planting seedlings.

To the planting input case 20, the lifting/lowering link mechanism 13 is connected, and the multiple (four in the present embodiment) planting units 21 are attached. The planting input case 20 includes a planting output shaft 30 that transmits power from the planting input case 20 to each planting transmission case 24.

Each of the planting units 21 is a rotary planting device including a planting transmission case 24, rotating cases 25, and planting arms 26. To the planting transmission case 24 of each planting unit 21, two rotating cases 25 are attached, and, to each of the rotating cases 25, two planting arms 26 are attached.

The seedling mounting table 22 is configured with a plate-shaped member and is installed to be inclined in a rear-lowering posture in a side view of the machine body. On the rear surface of the seedling mounting table 22, mounting surfaces on which seedling mats M are mounted are arranged side by side in the machine width direction in accordance with the number of planting arms 26 (the number of rows of the transplanter 1). Since the transplanter 1 of the present embodiment is an 8-row transplanter, there are eight surfaces as the mounting surfaces. On each of the mounting surfaces, a seedling mat M is placed in an inclined state.

Although not illustrated in FIG. 1 and FIG. 2, the transplanter 1 includes a seedling horizontal feeding mechanism 36 (see FIG. 4, which is to be described later) for horizontally conveying the seedling mounting table 22 and a seedling vertical feeding mechanism 37 (see FIG. 4, which is to be described later) for vertically conveying the seedling mounting table 22.

For example, as the seedling horizontal feeding mechanism 36 and the seedling vertical feeding mechanism 37, it is possible to use such publicly-known configurations as disclosed in Japanese Unexamined Patent Application Publication No. 2017-153453. Conveying horizontally is to move the seedling mounting table 22 in the vehicle width direction of the travel machine body 2. Conveying vertically is to move a seedling mat M on the seedling mounting table 22 toward a planting arm 26.

To the planting input case 20, driving force from the PTO shaft 14 is input. The power from the planting input case 20 is transmitted to each of the planting transmission cases 24 via the planting output shaft 30. The rotating cases 25 are rotationally driven by the power from the planting transmission cases 24. As a result, the tip of each planting arm 26 operates in a loop-shaped rotation trajectory. The tip of each planting arm 26 scrapes a seedling off a seedling mat M mounted on the seedling mounting table 22 when moving from up to down, so as to plant the seedling to the ground of the field F.

Since the transplanter 1 of the present embodiment is an 8-row transplanter, needless to say, it is possible to perform a planting work of eight rows by simultaneously operating the planting transmission cases 24 for all the planting units 21. It is also possible that the transplanter 1 only operates a part of the planting units 21, so as to perform a planting work of six rows, a planting work of four rows, and a planting work of two rows.

In addition, the seedling horizontal feeding mechanism 36 and the seedling vertical feeding mechanism 37 are driven by the power transmitted to the planting input case 20. Each time a planting arm 26 scrapes a seedling off a seedling mat M, the seedling horizontal feeding mechanism 36 horizontally conveys the seedling mounting table 22 in a continuous and reciprocating manner. When the seedling mounting table 22 reaches an edge of the reciprocating movement (a return point of the reciprocating movement), the seedling vertical feeding mechanism 37 vertically conveys the seedling mats on the seedling mounting table 22 in an intermittent manner.

The float 23 is mounted to a lower part of the planting section 3. The float 23 is arranged so that the lower surface thereof is capable of making contact with the ground of the field F. The float 23 makes contact with the ground, so that the ground is leveled before seedlings are planted.

FIG. 3 is a schematic diagram for explaining how the transplanter 1 travels in the field F. The field F is divided into a work area W, in which the planting work is performed by the transplanter 1, and a peripheral area N surrounding the work area W. For example, the work area W is in a rectangular shape in a plan view. The travel route R includes multiple straight paths P that are arranged side by side in the longitudinal direction of the work area W at an interval from each other. The straight paths P are set in the work area W. Each straight path P extends straight in the lateral direction of the work area W. The start point SP and end point EP of each straight path P are located at the boundary between the work area W and the peripheral area N.

The transplanter 1 travels in the field F in a zigzag manner. Specifically, the transplanter 1 travels in sequence from a straight path P located at one end side of the work area W with respect to the longitudinal direction (the rightmost in the plane of FIG. 3). When the transplanter 1 finishes traveling on the straight path P that is set on the other end side (the leftmost in the plane of FIG. 3) with respect to the longitudinal direction, the traveling of the transplanter 1 in the work area W ends. The start point SP of the straight path P on which the transplanter 1 firstly travels on the travel route R (the straight path P located on one end side with respect to the longitudinal direction) is referred to as the route starting point SS. The end point EP of the straight path P on which the transplanter 1 lastly travels on the travel route R (the straight path P located on the other end side with respect to the longitudinal direction) is referred to as the route ending point EE. When the transplanter 1 travels, the planting section 3 is towed by the travel machine body 2.

Next, an explanation is given of how the transplanter 1 travels on the travel route R. In the present embodiment, the transplanter 1 performs automatic traveling (autonomous traveling) along the straight paths P, and, in the peripheral area N, the transplanter 1 moves by manual traveling. Automatic traveling means that the traveling mechanism of the transplanter 1 is controlled by the automatic traveling control unit 51 (see FIG. 4, which is to be described) of the control unit 4 so that the transplanter 1 travels along the travel route R. On the other hand, manual traveling means that each mechanism included in the transplanter 1 is operated by the user so that the transplanter 1 travels.

In the following, the straight path P on which the transplanter 1 is currently traveling may be referred to as the first straight path P1 (first path), and the straight path P on which the transplanter 1 travels next may be referred to as the second straight path P2 (second path). The start point SP of the first straight path P1 is referred to as the first start point SP1, and the end point EP of the first straight path P1 is referred to as the first end point EP1. The start point SP of the second straight path P2 is referred to as the second start point SP2, and the end point EP of the second straight path P2 is referred to as the second end point EP2. The transplanter 1 travels on the first straight path P1, the peripheral area N, and second straight path P2 in that order.

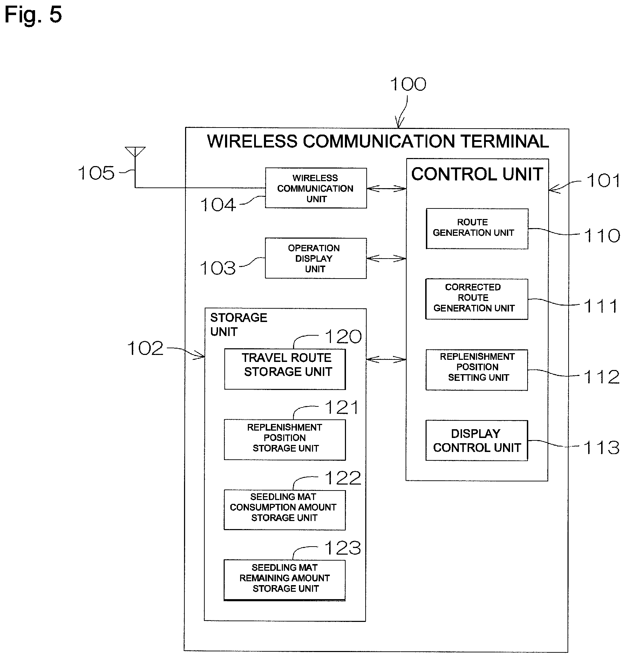

Before the transplanter 1 starts traveling along the travel route R, the user firstly moves the transplanter 1 to the start point SP of a straight path P by manual driving. In a case where the automatic traveling starting condition is satisfied, the user operates the operation display unit 103 (see FIG. 5, which is to be described later) of the wireless communication terminal 100 or an automatic traveling starting switch or the like displayed on the touchscreen display of the operation unit 11 (see FIG. 4, which is to be described later), so as to start automatic traveling.

The automatic traveling starting condition is that the transplanter 1 is located within a range of a predetermined distance from the start point SP of a straight path P as well as the orientation of the travel machine body 2 of the transplanter 1 is within a range of predetermined angles with respect to the travel direction. The range of predetermined ranges is a range of angles including the direction from the start point SP of the straight path P toward the end point EP thereof. That is, the range of predetermined angles includes, not only the direction from the start point SP of the straight path P toward the end point EP thereof, but also directions in which the orientation of the travel machine body 2 deviates from the direction from the start point SP toward the end point EP by predetermined angles. The automatic traveling starting switch can be operated only in a case where the transplanter 1 is located at the start point SP of a straight path P as well as the orientation of the travel machine body 2 is within the range of predetermined angles with respect to the travel direction. The orientation of the travel machine body 2 is acquired by the inertial measurement device 70 (see FIG. 4, which is to be described later) included in the transplanter 1.

When automatic traveling is started, the transplanter 1 automatically travels from the first start point SP1 of the first straight path P1 (the current straight path P) toward the first end point EP1. Then, in a case where the automatic traveling suspending condition is satisfied, the automatic traveling of the transplanter 1 is suspended.

For example, the automatic traveling suspending condition is that the transplanter 1 reaches the first end point EP1 of the first straight path P1. In a case where the automatic traveling is suspended, the user who is aboard the transplanter 1 manually controls the transplanter 1 to travel into the peripheral area N. In the peripheral area N, the user manually controls the transplanter 1 to turn so as to make a 180° direction change and controls the transplanter 1 to reach the second start point SP2 of the second straight path P2, which is next to the first straight path P1. Then, automatic traveling on the second straight path P2 is started.

When the travel machine body 2 travels on the first straight path P1 and the second straight path P2, the planting section 3 plants seedlings on the ground. The transplanter 1 is an example of the agricultural work machine that supplies a supply material to the first straight path P1 and the second straight path P2 while traveling along the travel route R.

There is a case in which the transplanter 1 runs short of seedling mats M on the seedling mounting table 22 while traveling on the travel route R. In this case, the user controls the transplanter 1 to travel to the replenishment position B for replenishment of seedling mats M. Then, the user manually controls the transplanter 1 to move to the second start point SP2.

FIG. 4 is a block diagram illustrating an electrical configuration of the transplanter 1.

As illustrated in FIG. 4, the transplanter 1 includes the control unit 4 for controlling operation (forward traveling, reverse traveling, stop, turn, etc.) of the travel machine body 2 as well as operation (lifting/lowering, driving, stop, etc.) of the planting section 3 mounted on the travel machine body 2. To the control unit 4, multiple controllers for controlling the respective units of the transplanter 1 are electrically connected.

The multiple controllers include the engine controller 31, the vehicle speed controller 32, the steering controller 33, the lifting/lowering controller 34, and the PTO controller 35.

The engine controller 31 controls the rotational frequency, or the like, of the engine 10. The engine controller 31 is electrically connected to the common rail device 41, which is a fuel injection device provided in the engine 10. The common rail device 41 is for injecting fuel into each cylinder of the engine 10. In this case, the fuel injection valve of the injector for each cylinder of the engine 10 is controlled to be opened or closed, so that high-pressure fuel, which is pressure-fed from a fuel tank to the common rail device 41 by a fuel supply pump, is injected from each injector to each cylinder of the engine 10, and, accordingly, the injection pressure, the injection timing, and the injection period (injection amount) of the fuel that is supplied from each injector are controlled with high accuracy. The engine controller 31 controls the rotational frequency, or the like, of the engine 10 by controlling the common rail device 41. The engine controller 31 can also stop the supply of fuel to the engine 10 so as to stop the driving of the engine 10 by controlling the common rail device 41.

The vehicle speed controller 32 controls the vehicle speed of the travel machine body 2 (which is also the vehicle speed of the transplanter 1) by controlling the transmission 27 (see FIG. 1). The transmission 27 is provided with a gearshift device 42, which may be a hydraulic continuously-variable gearshift device with a movable swash plate, for example.

The vehicle speed controller 32 changes the gear ratio of the transmission 27 by changing the angle of the swash plate of the gearshift device 42 by use of an actuator (not illustrated in the drawings). Accordingly, it possible to decelerate (accelerate) the travel machine body 2 to a desired vehicle speed or stop the travel machine body 2. By adjusting the changing speed of the angle of the swash plate of the gearshift device 42, it is possible to adjust the deceleration degree of the travel machine body 2. By adjusting the deceleration degree of the travel machine body 2, it is possible to adjust the distance needed for the travel machine body 2 to stop after deceleration is started.

The steering controller 33 is for controlling the steering angle of the front wheels 5 during automatic traveling. Specifically, a steering actuator 43 is provided in the middle part of the rotating shaft (steering shaft) of the steering handle 8. The steering controller 33 controls the steering actuator 43 so that the rotation angle of the steering handle 8 becomes the target steering angle. In this way, the steering angle of the front wheels 5 of the travel machine body 2 is controlled.

The lifting/lowering controller 34 is for controlling the planting section 3 to be lifted or lowered. The lifting/lowering controller 34 drives the lifting/lowering cylinder 15 by controlling a solenoid valve, which is omitted in the drawings, to be opened or closed, based on a controlling signal input from the control unit 4, in order to appropriately drive the planting section 3 to be lifted or lowered. With the lifting/lowering controller 34, the planting section 3 can be supported at a desired height such as a non-working height, at which the planting work is not performed, and a working height, at which the planting work is performed.

The PTO controller 35 is for controlling the rotation of the PTO shaft 14. Specifically, the transplanter 1 includes the PTO clutch 45 for switching transmission and cut-off of power to the PTO shaft 14. With this configuration, the PTO controller 35 switches the PTO clutch 45, based on a controlling signal input from the control unit 4, in order to rotationally drive the planting input case 20 of the planting section 3 via the PTO shaft 14 or to stop this rotational driving.

The position information calculation unit 49 (positioning unit) is electrically connected to the control unit 4. A positioning signal received by the satellite signal receiving antenna 46 is input to the position information calculation unit 49. The satellite signal receiving antenna 46 is for receiving signals from the positioning satellites configuring the satellite positioning system (GNSS: Global Navigation Satellite System). The position information calculation unit 49 calculates the position information of the travel machine body 2 or the planting section 3 (specifically, the satellite signal receiving antenna 46) as latitude/longitude/altitude information, for example.

The wireless communication unit 47 is electrically connected to the control unit 4. The wireless communication antenna 48 is connected to the wireless communication unit 47. For example, the wireless communication unit 47 may be configured with a wireless LAN router (Wi-Fi router). To the control unit 4, the operation unit 11 is electrically connected.

The inertial measurement device 70 is electrically connected to the control unit 4. The inertial measurement device 70 is a sensor unit that is capable of specifying the posture, acceleration, etc., of the transplanter 1. Specifically, the inertial measurement device 70 is provided with a sensor group including an angular velocity sensor and acceleration sensor mounted for each of the first axis, the second axis, and the third axis that are orthogonal to each other.

More specifically, the inertial measurement device 70 includes the first acceleration sensor for detecting acceleration in the first axis direction, the second acceleration sensor for detecting acceleration in the second axis direction, the third acceleration sensor for detecting acceleration in the third axis direction, the first angular velocity sensor for detecting angular velocity about the first axis, the second angular velocity sensor for detecting angular velocity about the second axis, and the third angular velocity sensor for detecting angular velocity about the third axis.

To the control unit 4, a horizontal feeding count detection sensor 38, a vertical taken amount detection sensor 39, and a seedling replenishment sensor 40 are electrically connected. The horizontal feeding count detection sensor 38 detects the number of times the seedling horizontal feeding mechanism 36 horizontally has fed the seedling mounting table 22. The vertical taken amount detection sensor 39 detects the vertical taken amount. The vertical taken amount is the amount of seedlings (the number of seedlings) scraped off a seedling mat M by one rotation of an planting arm 26 in the travel direction of the travel machine body 2. The seedling replenishment sensor 40 detects that a seedling mat M is mounted on the seedling mounting table 22. One seedling replenishment sensor 40 is provided for each mounting surface of the seedling mounting table 22.

For example, as the horizontal feeding count detection sensor 38, the vertical taken amount detection sensor 39, and the seedling replenishment sensor 40, it is possible to use such publicly-known configurations as disclosed in Japanese Unexamined Patent Application Publication No. 2017-153453.

The control unit 4 includes a microcomputer provided with a CPU and a memory 50 (ROM, RAM, etc.). The microcomputer functions as multiple function processing units by executing predetermined programs stored in the memory 50 (ROM). These multiple function processing units include the automatic traveling control unit 51, the seedling mat consumption amount calculation unit 52, the seedling mat remaining amount calculation unit 53, the seedling mat replenishment detection unit 54, etc.

The automatic traveling control unit 51 controls the respective controllers 31 through 35 to control the transplanter 1 to automatically travel along the currently-set travel route, suspend the automatic traveling, end the automatic traveling, etc. Specifically, in a case where the above-described automatic traveling starting condition is satisfied, the automatic traveling control unit 51 controls the transplanter 1 to automatically travel, and, in a case where the above-described automatic traveling suspending condition is satisfied, the automatic traveling control unit 51 controls the transplanter 1 to suspend the automatic traveling.

Suspension of automatic traveling means that automatic traveling is temporarily switched to manual traveling during a planting work in the field F. End of automatic traveling means that automatic traveling is switched to manual traveling when the entire planting work in the field F is completed.

The seedling mat consumption amount calculation unit 52 calculates the amount of seedling mats M that have been consumed (the seedling mat consumption amount) in the planting work, based on the horizontal feeding count, which is detected by the horizontal feeding count detection sensor 38, and the vertical taken amount, which is detected by the vertical taken amount detection sensor 39. For example, the seedling mat consumption amount is calculated on a per straight path P basis. The seedling mat remaining amount calculation unit 53 calculates the amount of seedling mats M (the seedling mat remaining amount) that are currently remaining on the seedling mounting table 22, based on a seedling mat consumption amount and the amount of seedling mats M that were present on the seedling mounting table 22 before the planting work is started (re-started).

The seedling mat replenishment detection unit 54 detects that the transplanter 1 is replenished with seedling mats M (seedling replenishment information), based on a signal transmitted from the seedling replenishment sensor 40.

FIG. 5 is a block diagram illustrating an electrical configuration of the wireless communication terminal 100 that communicates with the transplanter 1. Referring to FIG. 5, the wireless communication terminal 100 includes the control unit 101. The control unit 101 includes a microcomputer provided with a CPU and a memory (ROM, RAM, etc.). The storage unit 102, the operation display unit 103, the wireless communication unit 104, and the wireless communication antenna 105 are connected to the control unit 101. The operation display unit 103 is for displaying various kinds of data and accepting operations by the user. For example, the operation display unit 103 is configured with a touchscreen display. The storage unit 102 is configured with a storage device such as a hard disk, a non-volatile memory, or the like.

The wireless communication unit 104 and the wireless communication antenna 105 are devices used for performing wireless communication with the control unit 4 of the transplanter 1. It is possible that the wireless communication antenna 105 includes a wireless LAN adapter (Wi-Fi adapter). The wireless communication antenna 105 is connected to the control unit 101 via the wireless communication unit 104.

The control unit 101 includes the route generation unit 110, the corrected route generation unit 111, the replenishment position setting unit 112, and the display control unit 113. Before the transplanter 1 starts working in the field F, the route generation unit 110 generates a travel route on which the transplanter 1 is controlled to travel. The replenishment position setting unit 112 sets a position (replenishment position) for replenishing the transplanter 1 with seedling mats.

A travel route generated by the route generation unit 110, a corrected travel route generated by the corrected route generation unit 111, and position information of a replenishment position that is set by the replenishment position setting unit 112 are transmitted from the wireless communication terminal 100 to the control unit 4 of the transplanter 1. The seedling mat remaining amount calculated by the seedling mat remaining amount calculation unit 53 of the control unit 4 of the transplanter 1 and the seedling replenishment information detected by the seedling mat replenishment detection unit 54 of the control unit 4 of the transplanter 1 are transmitted from the control unit 4 to the control unit 101 of the wireless communication terminal 100.

The display control unit 113 controls display contents of the operation display unit 103. Specifically, it is possible that the display control unit 113 displays a travel route on the operation display unit 103, displays a predetermined image indicating the position of the travel machine body 2 on the travel route displayed on the operation display unit 103, and displays a predetermined image indicating a replenishment position. It is also possible that the display control unit 113 displays a warning on the operation display unit 103 of the wireless communication terminal 100 that the seedling mat remaining amount is less than a predetermined threshold value.

After automatic traveling of the transplanter 1 is suspended and before the automatic traveling of the transplanter 1 is re-started, in a case where a predetermined condition is satisfied, the corrected route generation unit 111 generates a corrected travel route by switching the second start point SP2 and the second end point EP2 of the current travel route R. In the present embodiment, the predetermined condition is that the straight distance (second distance) between the replenishment position and the second end point EP2 is shorter than the straight distance (first distance) between the replenishment position and the second start point SP2.

The storage unit 102 of the wireless communication terminal 100 includes the travel route storage unit 120, the replenishment position storage unit 121, the seedling mat consumption amount storage unit 122, and the seedling mat remaining amount storage unit 123. The travel route storage unit 120 stores a travel route R generated by the route generation unit 110 and a corrected travel route generated by the corrected route generation unit 111. The replenishment position storage unit 121 stores a replenishment position that is set by the replenishment position setting unit 112. The seedling mat consumption amount storage unit 122 stores the seedling mat consumption amount, which is transmitted from the control unit 4 of the transplanter 1, on a per straight path P basis. The seedling mat remaining amount storage unit 123 store the seedling mat remaining amount, which is transmitted from the control unit 4 of the transplanter 1.

Referring again to FIG. 4, the storage unit 60 is connected to the control unit 4. The storage unit 60 is configured with a storage device such as a hard disk, a non-volatile memory, or the like. The storage unit 60 includes the travel route storage unit 61, the replenishment position storage unit 62, the seedling mat consumption amount storage unit 63, and the seedling mat remaining amount storage unit 64. The travel route storage unit 61 stores a travel route and a corrected travel route, which are transmitted from the wireless communication terminal 100 to the control unit 4 of the transplanter 1. The replenishment position storage unit 62 stores the position information of a replenishment position, which is transmitted from the wireless communication terminal 100 to the control unit 4 of the transplanter 1. The seedling mat consumption amount storage unit 63 stores the seedling mat consumption amount, which is calculated by the seedling mat consumption amount calculation unit 52, on a per straight path P basis. The seedling mat remaining amount storage unit 64 stores the seedling mat remaining amount, which is calculated by the seedling mat remaining amount calculation unit 53.

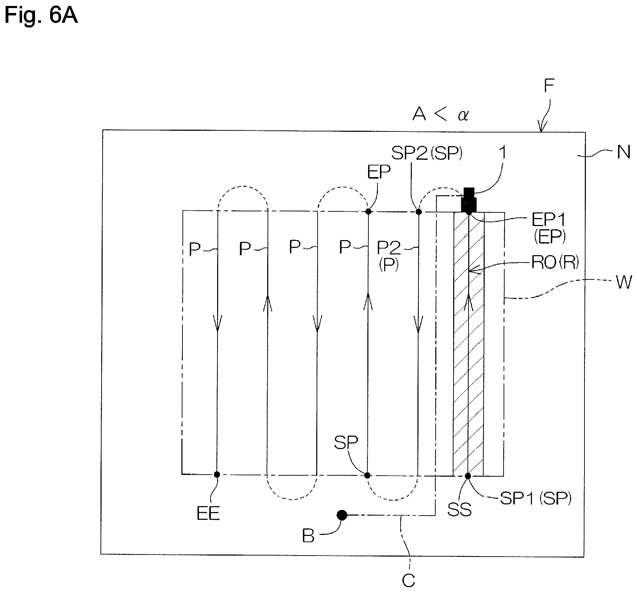

Hereinafter, an explanation is given of how the corrected route generation unit 111 generates a corrected travel route when the transplanter 1 travels in the field F. FIG. 6A through FIG. 6C are schematic diagrams for explaining how the transplanter 1 operates in the field F before and after replenishment of seedling mats M. Hereinafter, the travel route R generated by the route generation unit 110 is referred to as the initial travel route R0.

Referring to FIG. 6A, when the transplanter 1 reaches the first end point EP1 of the first straight path P1, in a case where the seedling mat remaining amount A, which is calculated by the seedling mat remaining amount calculation unit 53, is less than a predetermined threshold value α (A<α), a warning that the seedling mat remaining amount A is less than the predetermined threshold value α is displayed on the operation display unit 103 of the wireless communication terminal 100. In a case where the warning is displayed, the user may move the transplanter 1 to the replenishment position B by manual driving. Here, for example, the user moves the transplanter 1 along the route C (the route indicated by the dashed-dotted line in FIG. 6A) on which the first straight path P1 is avoided, so as not to ruin the ground to which the planting work has already been performed.

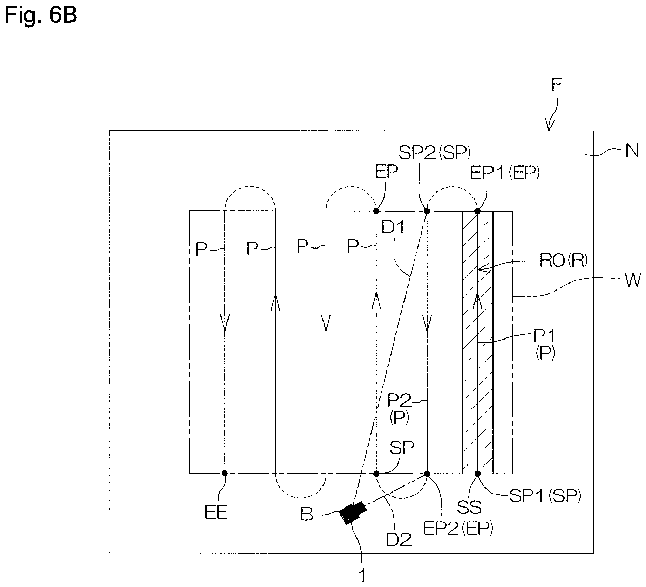

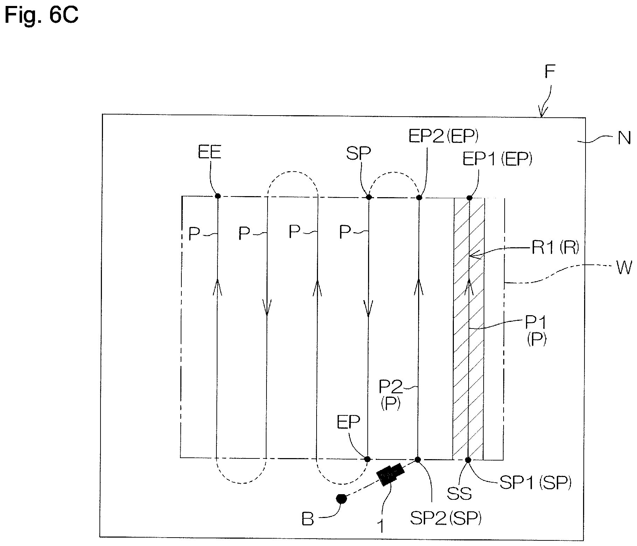

Referring to FIG. 6B, when the transplanter 1 reaches the replenishment position B and the user replenishes the transplanter 1 with seedling mats M, the seedling replenishment information is transmitted from the seedling mat replenishment detection unit 54 to the wireless communication terminal 100. The corrected route generation unit 111 of the wireless communication terminal 100 generates such a corrected travel route R1 as illustrated in FIG. 6C in a case where the distance (second distance D2) between the replenishment position B and the second end point EP2 is shorter than the distance (first distance D1) between the replenishment position B and the second start point SP2.

The corrected travel route R1 is a route of which the start points SP and the end points EP of all the straight paths P on the downstream side relative to the first straight path P1 of the initial travel route R0 are switched. Therefore, the second start point SP2 of the corrected travel route R1 is at the same position as the second end point EP2 of the second straight path P2 of the initial travel route R0 (see FIG. 3), and the second end point EP2 of the corrected travel route R1 is at the same position as the second start point SP2 of the second straight path P2 of the initial travel route R0 (see FIG. 3).

Then, the corrected travel route R1 is transmitted from the wireless communication terminal 100 to the control unit 4 of the transplanter 1 and stored in the travel route storage unit 61 of the storage unit 60. Furthermore, the travel route data 55 that is set in the memory 50 is changed to travel route data including the corrected travel route R1. Moreover, the corrected travel route R1 is displayed on the operation display unit 103 of the wireless communication terminal 100. The user manually controls the transplanter 1 travel to the second start point SP2 of the corrected travel route R1 displayed on the operation display unit 103. Then, when the automatic traveling starting condition is satisfied, the transplanter 1 starts automatic driving along the second straight path P2. In this way, the automatic traveling system is configured with the transplanter 1 and the wireless communication terminal 100.

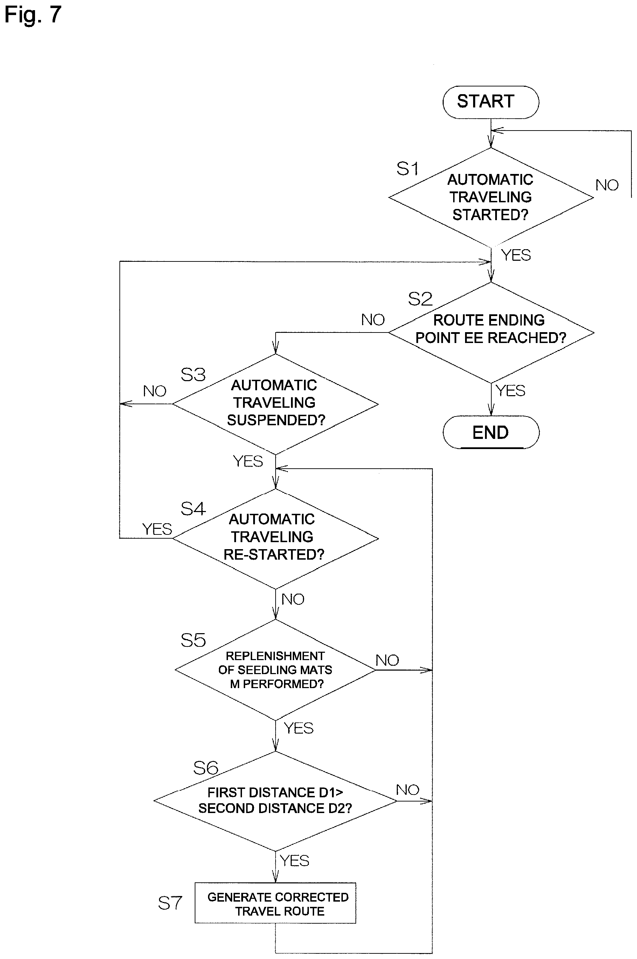

Next, a detailed explanation is given of the corrected route generation processing performed by the corrected route generation unit 111. FIG. 7 is a flowchart for explaining an example of the corrected route generation processing performed by the corrected route generation unit 111.

Referring to FIG. 7, the corrected route generation unit 111 determines whether or not automatic traveling is started (Step S1). In a case where automatic traveling of the transplanter 1 is not started (Step S1: NO), the corrected route generation unit 111 returns to Step S1.

In a case where automatic traveling of the transplanter 1 is started (Step S1: YES), the corrected route generation unit 111 monitors whether or not the transplanter 1 has reached the route ending point EE (Step S2) and monitors whether or not the automatic traveling of the transplanter 1 is suspended (Step S3). In a case where the transplanter 1 has reached the route ending point EE (Step S2: YES), the corrected route generation unit 111 ends the corrected route generation processing.

In a case where, before the transplanter 1 reaches the route ending point EE (Step S2: NO), the automatic traveling of the transplanter 1 is suspended (Step S3: YES), the corrected route generation unit 111 determines whether or not the automatic traveling of the transplanter 1 is re-started (Step S4). In a case where the automatic traveling of the transplanter 1 is re-started (Step S4: YES), the corrected route generation unit 111 returns to Step S2.

Note that, since the automatic traveling suspending condition is that the transplanter 1 reaches the first end point EP1 of the first straight path P1 in the present embodiment, the automatic traveling of the transplanter 1 is suspended every time the transplanter 1 finishes traveling on a straight path P until the transplanter 1 reaches the route ending point EE.

In a case where the automatic traveling of the transplanter 1 is not re-started (Step S4: NO), the corrected route generation unit 111 determines whether or not the transplanter 1 is replenished with seedling mats M (Step S5). In a case where the transplanter 1 is not replenished with seedling mats M (Step S5: NO), the corrected route generation unit 111 returns to Step S4. In a case where the transplanter 1 is replenished with seedling mats M (Step S5: YES), the corrected route generation unit 111 determines whether or not the first distance D1 is longer than the second distance D2 (Step S6). In a case where the first distance D1 is equal to or shorter than the second distance D2 (Step S6: NO), the corrected route generation unit 111 returns to Step S4. In a case where the first distance D1 is longer than the second distance D2, the corrected route generation unit 111 generates a corrected travel route (Step S7).

In other words, after the automatic traveling of the transplanter 1 is suspended and before the automatic traveling of the transplanter 1 is re-started (after the transplanter 1 reaches the first end point EP1 and before the transplanter 1 reaches the second start point SP2), in a case where the transplanter 1 is replenished with seedling mats and the first distance D1 is longer than the second distance D2, the corrected route generation unit 111 generates the corrected travel route. In a case where the corrected travel route is formed, the corrected route generation unit 111 returns to Step S4.

In the present embodiment, the corrected route generation unit 111 determines whether or not the first distance D1 is longer than the second distance D2 in Step S6. However, it is also possible that the corrected route generation unit 111 determines whether or not the first distance D1 is equal to or longer than the second distance D2 in Step S6. That is, it is also possible that the corrected travel route R1 is generated in a case where the first distance D1 is equal to the second distance D2.

In the automatic traveling system according to the first embodiment, in a case where the first distance D1 is shorter than the second distance D2 and the transplanter 1 is replenished with seedling mats M at the replenishment position B after the transplanter 1 reaches the first end point EP1 of the first straight path P1 and before starting traveling on the second straight path P2, the corrected travel route R1 is generated.

In a case where the moving distance for the transplanter 1 to travel from the replenishment position B to the second end point EP2 is shorter than the moving distance for the transplanter 1 to travel from the replenishment position B to the second start point SP2, the distance for the transplanter 1 to travel in the field F for replenishment of seedling mats M can be reduced if the second start point SP2 and the second end point EP2 on the current travel route R are switched. For example, in a case where the second distance D2 is shorter than the first distance D1, there is a high possibility that the moving distance for the transplanter 1 to travel from the replenishment position B to the second end point EP2 is shorter than the moving distance for the transplanter 1 to travel from the replenishment position B to the second start point SP2. Therefore, with a configuration in which it is possible to generate a travel route R (corrected travel route R1) of which the second start point SP2 and the second end point EP2 are switched, the distance for the transplanter 1 to travel in the field F can be reduced.

Furthermore, in the automatic traveling system according to the first embodiment, the automatic traveling control unit 51 suspends automatic traveling of the transplanter 1 in a case where the transplanter 1 reaches the first end point EP1. In other words, every time the transplanter 1 reaches the first end point EP1, the automatic traveling of the transplanter 1 is suspended. Therefore, every time the transplanter 1 reaches the first end point EP1, the user can determine whether or not replenishment of seedling mats M is necessary. Accordingly, it is possible to prevent occurrence of such a situation where the seedling mat remaining amount A runs out while the transplanter 1 is traveling on a travel route R.

### <Second Embodiment>

Next, an explanation is given of the transplanter 1P according to the second embodiment of the present invention. The mechanical configuration and the electrical configuration of the transplanter 1 according to the second embodiment are the same as the mechanical configuration and the electrical configuration of the transplanter 1 according to the first embodiment (see FIG. 1, FIG. 2, and FIG. 4). Furthermore, the electrical configuration of the wireless communication terminal 100 according to the second embodiment is the same as the electrical configuration of the wireless communication terminal 100 according to the first embodiment (see FIG. 5). In the second embodiment, the automatic traveling system is configured with the transplanter 1 and the wireless communication terminal 100.

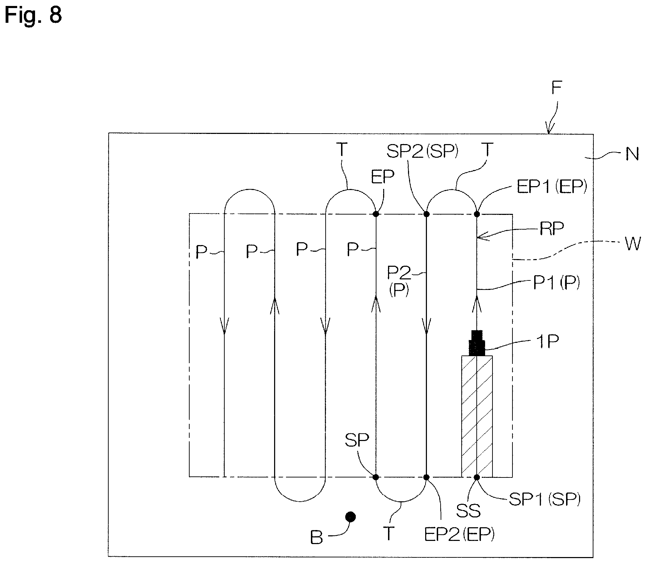

Hereinafter, an explanation is given of how the transplanter 1 according to the second embodiment travels on a travel route RP. FIG. 8 is a schematic diagram for explaining how the transplanter 1 according to the second embodiment of the present invention travels in the field F.

In the second embodiment, unlike the first embodiment, the travel route RP includes a turning path T in addition to the first straight path P1 and the second straight path P2. The turning path T is set in the peripheral area N. The turning path T is an arc-shaped path connecting the first end point EP1 and the second start point SP2.

In the present embodiment, unlike the first embodiment, the automatic traveling control unit 51 controls the transplanter 1 to automatically travel in both of a case where the transplanter 1 is positioned on a straight path P and a case where the transplanter 1 is positioned on a turning path T.

Specifically, first, the user moves the transplanter 1 to the route starting point SS by manual driving. In a case where the automatic traveling starting condition is satisfied, the user operates the wireless communication terminal 100 to start automatic traveling. In the present embodiment, the automatic traveling starting condition is the same as the automatic traveling starting condition in the first embodiment.

When the automatic traveling is started, the transplanter 1 plants seedlings on the ground on the first straight path P1 and the second straight path P2 while traveling on the first straight path P1, the turning path T, and the second straight path P2. Then, when the transplanter 1 reaches the route ending point EE of the travel route RP, the automatic traveling is ended.

In a case where the automatic traveling suspending condition is satisfied before the transplanter 1 reaches the route ending point EE, the automatic traveling control unit 51 controls the transplanter 1 to suspend the automatic traveling. In the present embodiment, the automatic traveling suspending condition is, for example, that the remaining amount of seedling mats M on the seedling mounting table 22 of the transplanter 1 (the seedling mat remaining amount A) is less than a predetermined threshold value α (A<α) when the transplanter 1 reaches the first end point EP1. That is, in a case where the remaining amount of seedling mats M (seedling mat remaining amount A), which is calculated by the seedling mat remaining amount calculation unit 53 when the transplanter 1P reaches the first end point EP1, is less than the predetermined threshold value α, the automatic traveling is suspended. In a case where the automatic traveling is suspended, it is also possible that the display control unit 113 of the wireless communication terminal 100 displays a warning on the operation display unit 103 that the seedling mat remaining amount A is less than the threshold value α.

In the second embodiment, it is also possible that the automatic traveling suspending condition is that the seedling mat remaining amount A is less than the amount of seedling mats M that were consumed (seedling mat consumption amount) on the first straight path P1.

In a case where the automatic traveling is suspended, the user moves the transplanter 1 to the replenishment position B by manual traveling, so as to then replenish the transplanter 1 with seedling mats M. Here, the path on which the user manually controls the transplanter 1 to travel is a path (not illustrated in the drawings) avoiding the travel route R, as with the first embodiment.

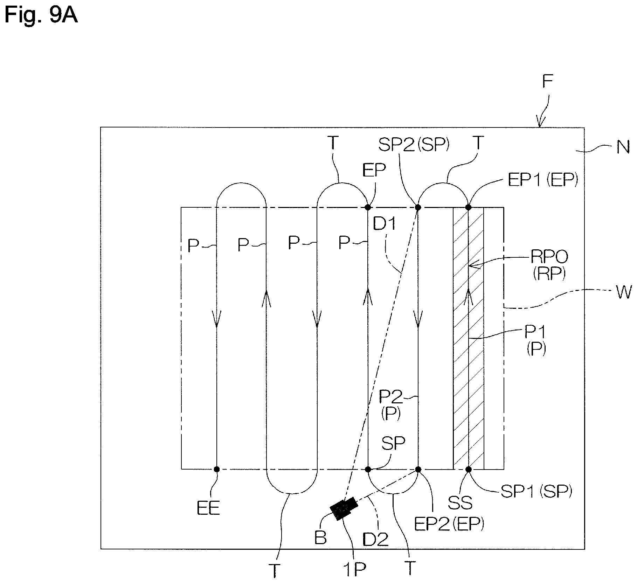

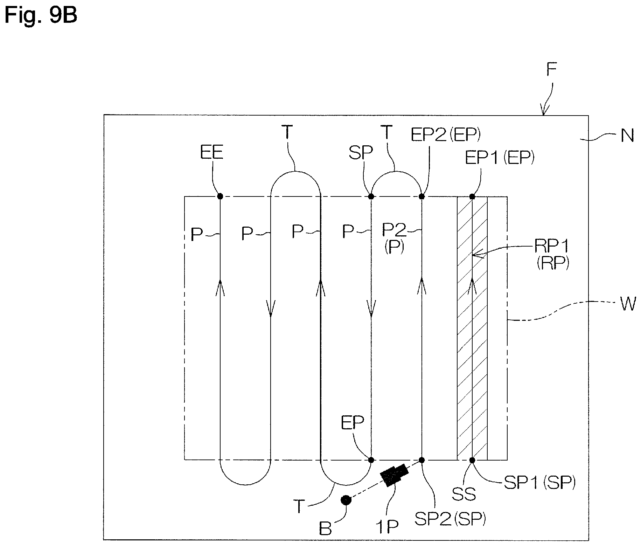

FIG. 9A and FIG. 9B are schematic diagrams for explaining how the transplanter 1 operates in the field F before and after replenishment of seedling mats M.

Referring to FIG. 9A, in a case where the automatic traveling of the transplanter 1 traveling on the initial travel route R0 is suspended, the transplanter 1 is manually controlled to travel from the first end point E1 toward the replenishment position B. When the transplanter 1 reaches the replenishment position B and the user replenishes the transplanter 1 with seedling mats M, the seedling replenishment information is transmitted from the seedling mat replenishment detection unit 54 to the wireless communication terminal 100.

The corrected route generation unit 111 of the wireless communication terminal 100 generates such a corrected travel route RP1 as illustrated in FIG. 9B in a case where the second distance D2 is shorter than the first distance D1. The corrected travel route RP1 is a route of which the start point SP and the end point EP of each of the straight paths P on the downstream side relative to the first straight path P1 of the initial travel route RP0 are switched. Therefore, the second start point SP2 of the corrected travel route RP1 is at the same position as the second end point EP2 of the second straight path P2 of the initial travel route RP0 (see FIG. 8), and the second end point EP2 of the corrected travel route RP1 is at the same position as the second start point SP2 of the second straight path P2 of the initial travel route RP0 (see FIG. 8).

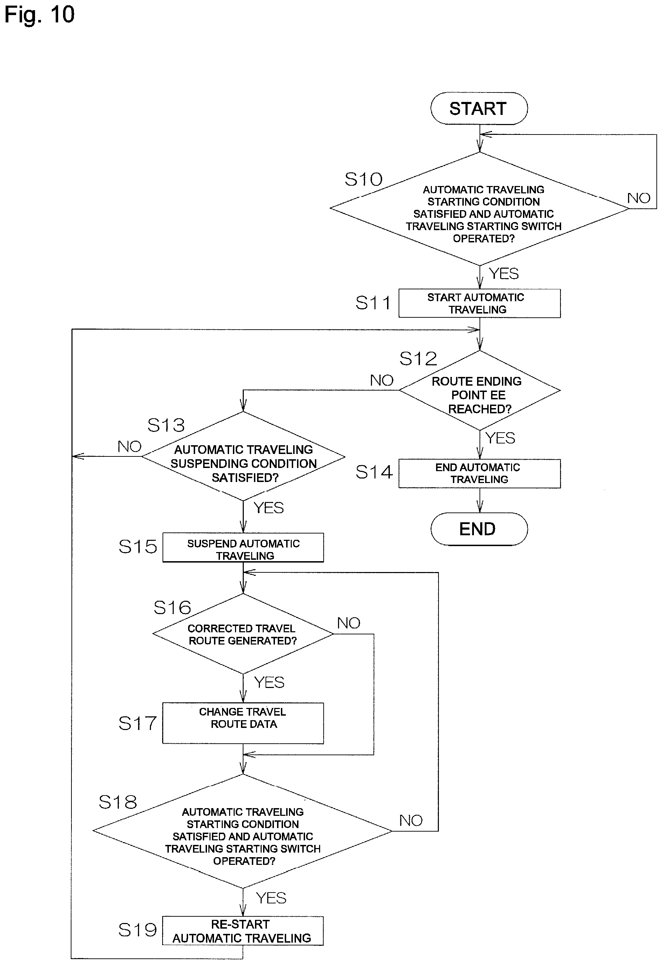

Next, an explanation is given of the automatic traveling processing performed by the automatic traveling control unit 51 in the second embodiment. Note that the corrected route generation processing performed by the corrected route generation unit 111 is the same as the corrected route generation processing (see FIG. 7) in the first embodiment. FIG. 10 is a flowchart for explaining an example of the automatic traveling control processing performed by the automatic traveling control unit 51 included in the transplanter 1.

The automatic traveling control unit 51 determines whether or not the automatic traveling starting condition is satisfied and the automatic traveling starting switch is operated (Step S10). In a case where the automatic traveling starting condition is not satisfied and/or the automatic traveling switch is not operated (Step S10: NO), the automatic traveling control unit 51 returns to Step S10. In a case where the automatic traveling starting condition is satisfied and the automatic operation starting switch is operated (Step S10: YES), the automatic traveling control unit 51 starts automatic traveling of the transplanter 1 (Step S11).

When the automatic traveling is started, the automatic traveling control unit 51 monitors whether or not the transplanter 1 has reached the route ending point EE (Step S12) and monitors whether or not the automatic traveling suspending condition is satisfied (Step S13). In a case where the transplanter 1 has reached the route ending point EE (Step S12: YES), the automatic traveling control unit 51 ends the automatic traveling of the transplanter 1 (Step S14). Thereby, the automatic traveling control processing is ended.

In a case where, before the transplanter 1 reaches the route ending point EE (Step S12: NO), the automatic traveling suspending condition is satisfied (Step S13: YES), the automatic traveling control unit 51 suspends the automatic traveling of the transplanter 1 (Step S15). When the automatic traveling is suspended, the automatic traveling control unit 51 determines whether or not the corrected travel route RP1 is generated by the corrected route generation unit 111 (Step S16).

In a case where the corrected travel route RP 1 is generated in Step S16 (Step S16: YES), the automatic traveling control unit 51 changes the travel route data in the memory 50 (Step S17). Specifically, when the control unit 4 of the transplanter 1 receives the information indicating that the corrected travel route RP1 is generated, the automatic traveling control unit 51 changes the travel route data stored in the memory 50 from the travel route data including the current travel route RP to the travel route data including the corrected travel route RP1. Then, the automatic traveling control unit 51 determines whether or not the automatic traveling starting condition is satisfied (Step S18).

In a case where the corrected travel route RP1 is not generated in Step S16 (Step S16: NO), the automatic traveling control unit 51 proceeds to Step S18 without changing the travel route data.

Then, in Step S18, in a case where the automatic traveling starting condition is not satisfied or the automatic traveling starting switch is not operated (Step S18: NO), the automatic traveling control unit 51 returns to Step S16. In a case where the automatic traveling starting condition is satisfied and the automatic traveling starting switch is operated in Step S18 (Step S18: YES), the automatic traveling control unit 51 re-starts the automatic traveling of the transplanter 1 (Step S19). When the automatic traveling of the transplanter 1 is re-started, the automatic traveling control unit 51 returns to Step S12.

As with the automatic traveling system of the first embodiment, the automatic traveling system of the second embodiment has such a configuration that is capable of generating a travel route R (corrected travel route R1) of which the second start point SP2 and the second end point EP2 are switched. Therefore, it is possible to reduce the distance for the transplanter 1 to travel in the field F.

Furthermore, in the automatic traveling system of the second embodiment, the automatic traveling control unit 51 suspends automatic traveling of the transplanter 1 in a case where the seedling mat remaining amount A is less than a predetermined threshold value α when the transplanter 1 reaches the first end point EP1, for example. Therefore, since the user can recognize the proper timing for replenishment of seedling mats M because of the suspension of the automatic traveling of the transplanter 1, it is possible that the transplanter 1 is replenished with seedling mats M at an appropriate timing. Therefore, it is possible to further prevent occurrence of such a situation where the seedling mat remaining amount A runs out while the transplanter 1 is traveling on a travel route R. Additionally, the time required for the planting work can be reduced, compared to such a case in which automatic traveling of the transplanter 1 is suspended every time the transplanter 1 reaches the first end point EP1.

As described above, unlike the second embodiment, it is also possible that the automatic traveling control unit 51 is configured to suspend automatic traveling of the transplanter 1 in a case where the seedling mat remaining amount A is less than the seedling mat consumption amount on the first straight path P1. Even in this case, since the user can recognize the proper timing for replenishment of seedling mats M because of the suspension of the automatic traveling of the transplanter 1, it is possible that the transplanter 1 is replenished with seedling mats M at an appropriate timing. Therefore, it is possible to further prevent occurrence of such a situation where the seedling mat remaining amount A runs out while the transplanter 1 is traveling on a travel route R. Additionally, the time required for the planting work can be reduced, compared to such a case in which automatic traveling of the transplanter 1 is suspended every time the transplanter 1 reaches the first end point EP1. Furthermore, even in a case where the seedling mat consumption amount on the first straight path P1 is higher than expected, it is possible to accurately grasp the seedling mat remaining amount A.

### <Third Embodiment>

Next, an explanation is given of the transplanter 1 according to the third embodiment of the present invention. The mechanical configuration and the electrical configuration of the transplanter 1 according to the third embodiment are the same as the mechanical configuration and the electrical configuration of the transplanter 1 according to the first embodiment (see FIG. 1, FIG. 2, and FIG. 4). Furthermore, the electrical configuration of the wireless communication terminal 100 according to the third embodiment is the same as the electrical configuration of the wireless communication terminal 100 according to the first embodiment (see FIG. 5). In the third embodiment, the automatic traveling system is configured with the transplanter 1 and the wireless communication terminal 100. In the third embodiment, as with the first embodiment, the transplanter 1 performs automatic traveling along a straight path P, and, in the peripheral area N, the transplanter 1 moves by manual traveling.

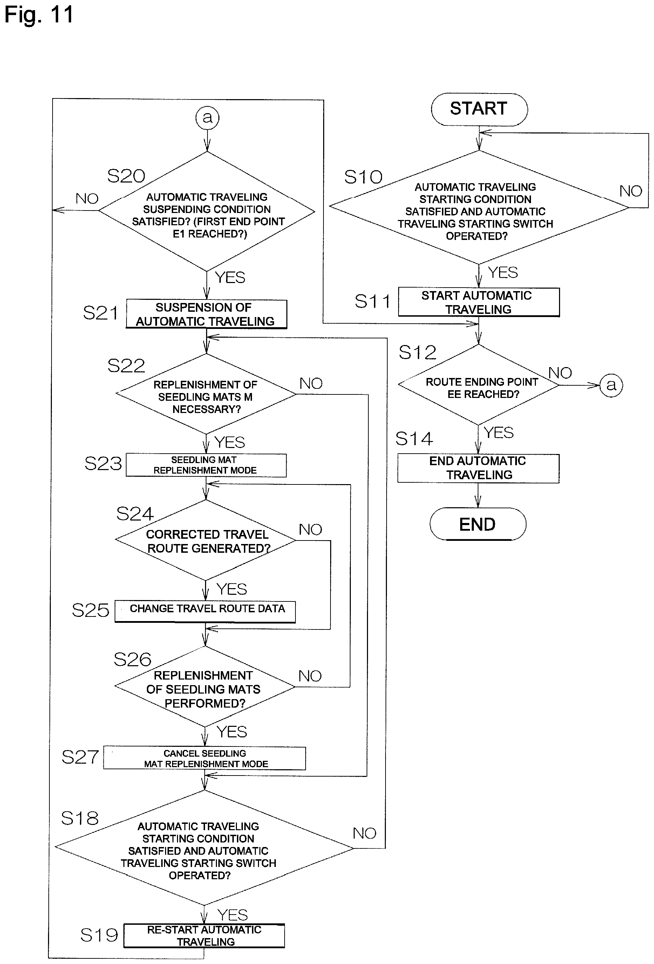

The transplanter 1 according to the third embodiment is different from the transplanter 1 according to the first embodiment mainly in the following aspects. The transplanter 1 according to the third embodiment is configured such that, in a case where replenishment of seedling mats M is necessary when automatic traveling is suspended, the automatic traveling control unit 51 shifts the traveling mode to a seedling mat replenishment mode in which re-starting of the automatic traveling is prohibited during the time until the transplanter 1 is replenished with seedling mats M. FIG. 11 is a flowchart for explaining an example of the automatic traveling control processing performed by the automatic traveling control unit 51 included in the transplanter 1 according to the third embodiment.

The flowchart illustrated in FIG. 11 is a flowchart in which Step S20 to Step S27 are incorporated instead of Step S13 and S15 to Step S17 of the flowchart illustrated in FIG. 10. The detailed explanations of Step S10 to Step S12 and Step S14, which are almost the same as in the flowchart in FIG. 10, are to be omitted here.

When automatic traveling is started, the automatic traveling control unit 51 monitors whether or not the transplanter 1 has reached the route ending point EE (Step S12) and monitors whether or not the automatic traveling suspending condition (that the transplanter 1 has reached the first end point E1) is satisfied (Step S20). In a case where the transplanter 1 has reached the route ending point EE (Step S12: YES), the automatic traveling control unit 51 ends the automatic traveling of the transplanter 1 (Step S14). Thereby, the automatic traveling control processing is ended.

In a case where, before the transplanter 1 reaches the route ending point EE (Step S12: NO), the automatic traveling suspending condition is satisfied (Step S20: YES), that is, the transplanter 1 reaches the first end point EP1 of the first straight path P1, the automatic traveling of the transplanter 1 is suspended (Step S21). Since the automatic traveling suspending condition is that the transplanter 1 reaches the first end point E1 in the third embodiment, the automatic traveling of the transplanter 1 is suspended every time the transplanter 1 finishes traveling on a straight path P until the transplanter 1 reaches the route ending point EE. Therefore, when the transplanter 1 reaches the end points EP other than the route ending point EE, the automatic traveling control unit 51 always proceeds to Step S21.

When the automatic traveling is suspended in Step S21, the automatic traveling control unit 51 determines whether or not replenishment of seedling mats M is necessary (Step S22). Whether or not replenishment of seedling mats M is necessary is determined by comparing the seedling mat remaining amount A with a predetermined threshold value α or with a seedling mat consumption amount, as in the above-described embodiments. In a case where it is determined in Step S22 that seedling mats M are not necessary (Step S22: NO), the automatic traveling control unit 51 proceeds to Step S18.

In a case where it is determined in Step S22 that replenishment of seedling mats M is necessary (Step S22: YES), the automatic traveling control unit 51 shifts the traveling mode to the seedling mat replenishment mode (Step S22). When the traveling mode is shifted to the seedling mat replenishment mode, the automatic traveling control unit 51 determines whether or not the corrected travel route RP1 is generated by the corrected route generation unit 111 (Step S24).

In a case where the corrected travel route R1 is generated in Step S24 (Step S24: YES), the automatic traveling control unit 51 changes the travel route data in the memory 50 (Step S25). The method for changing the travel route data in the memory 50 is the same as the method described in the second embodiment. Then, the automatic traveling control unit 51 determines whether or not replenishment of seedling mats M have been performed (Step S26).

In a case where the corrected travel route R1 is not generated in Step S24 (Step S24: NO), the automatic traveling control unit 51 proceeds to Step S26 without changing the travel route data.

In a case where replenishment of seedling mats M is not performed (Step S26: NO), the automatic traveling control unit 51 returns to Step S24. In a case where replenishment of seedling mats M is performed (Step S26: YES), the automatic traveling control unit 51 cancels the seedling mat replenishment mode (Step S27). When the seedling mat replenishment mode is canceled, the automatic traveling control unit 51 proceeds to Step S18.

In Step S18, in a case where the automatic traveling starting condition is not satisfied or the automatic traveling starting switch is not operated (Step S18: NO), the automatic traveling control unit 51 returns to Step S22. In a case where the automatic traveling starting condition is satisfied and the automatic traveling starting switch is operated in Step S18 (Step S18: YES), the automatic traveling control unit 51 re-starts the automatic traveling of the transplanter 1 (Step S19). When the automatic traveling of the transplanter 1 is re-started, the automatic traveling control unit 51 returns to Step S12.

According to the third embodiment, in a case where replenishment of seedling mats M is not performed although replenishment of seedling mats M is necessary, re-starting of automatic traveling is prohibited. Therefore, since automatic traveling on the second straight path P2 is not started in a state where the seedling mat remaining amount A is insufficient, it is possible to prevent occurrence of such a situation in which the seedling mat remaining amount A runs out during traveling on a straight path P.

### <Fourth Embodiment>

Next, an explanation is given of the transplanter 1 according to the fourth embodiment of the present invention. The mechanical configuration and the electrical configuration of the transplanter 1 according to the fourth embodiment are the same as the mechanical configuration and the electrical configuration of the transplanter 1 according to the first embodiment (see FIG. 1, FIG. 2, and FIG. 4). Furthermore, the electrical configuration of the wireless communication terminal 100 according to the second embodiment is the same as the electrical configuration of the wireless communication terminal 100 according to the first embodiment (see FIG. 5). In the fourth embodiment, the automatic traveling system is configured with the transplanter 1 and the wireless communication terminal 100. In the fourth embodiment, as with the second embodiment, a travel route RP includes a turning path T in addition to a first straight path P1 and a second straight path P2, and, in both of a case where the transplanter 1 is positioned on a straight path P and a case where the transplanter 1 is positioned on a turning path T, the transplanter 1 is controlled to automatically travel.

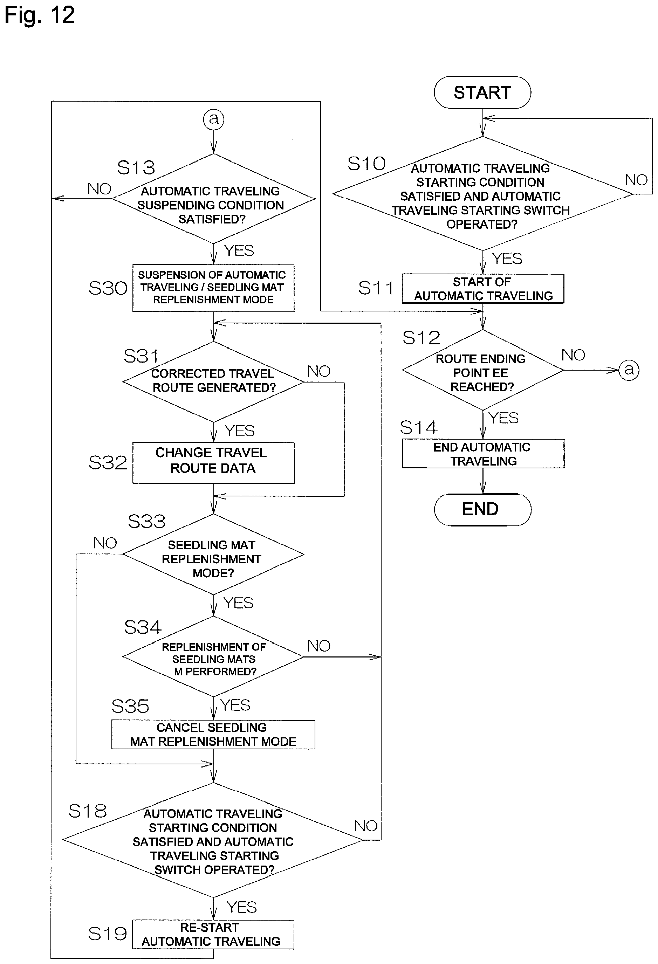

The transplanter 1 according to the fourth embodiment is different from the transplanter 1 according to the second embodiment mainly in the following aspects. The transplanter 1 according to the fourth embodiment is configured such that, in a case where replenishment of seedling mats M is necessary when automatic traveling is suspended, the automatic traveling control unit 51 shifts the traveling mode to the seedling mat replenishment mode. FIG. 12 is a flowchart for explaining an example of the automatic traveling control processing performed by the automatic traveling control unit 51 included in the transplanter 1 according to the fourth embodiment.

The flowchart illustrated in FIG. 12 is a flowchart in which Step S30 to Step S35 are incorporated between Step S13 and Step S18 in the flowchart illustrated in FIG. 10, instead of Step S15 to Step S17. The detailed explanations of Step S10 to Step S14, which are almost the same as in the flowchart of FIG. 10, are to be omitted here.

In Step S13, in a case where it is determined that the automatic traveling suspending condition is satisfied (Step S13: YES), the automatic traveling control unit 51 suspends the automatic traveling of the transplanter 1 and shifts the traveling mode of the transplanter 1 to the seedling mat replenishment mode (Step S30). In a case where the automatic traveling of the transplanter 1 is suspended and the traveling mode of the transplanter 1 is shifted to the seedling mat replenishment mode, the automatic traveling control unit 51 determines whether or not the corrected travel route R1 is generated (Step S31).

In a case where the corrected travel route RP1 is generated in Step S31 (Step S31: YES), the automatic traveling control unit 51 changes the travel route data in the memory 50 (Step S32).

Specifically, when the control unit 4 of the transplanter 1 receives the information indicating that the corrected travel route RP1 is generated, the automatic traveling control unit 51 changes the travel route data stored in the memory 50 from the travel route data including the current travel route RP to the travel route data including the corrected travel route RP1. Then, the automatic traveling control unit 51 determines whether or not the current traveling mode is the seedling mat replenishment mode (Step S33).

In a case where the corrected travel route RP 1 is not generated in Step S31 (Step S31: NO), the automatic traveling control unit 51 proceeds to Step S33 without changing the travel route data.

In a case where the current traveling mode is the seedling mat replenishment mode (Step S33: YES), the automatic traveling control unit 51 determines whether or not replenishment of seedling mats M has been performed (Step S34). In a case where replenishment of seedling mats M is not performed (Step S34: NO), the automatic traveling control unit 51 returns to Step S31. In a case where replenishment of seedling mats M is performed (Step S34: YES), the automatic traveling control unit 51 cancels the seedling mat replenishment mode (Step S35). When the seedling mat replenishment mode is canceled, the automatic traveling control unit 51 proceeds to Step S18.

In Step S33, in a case where the current traveling mode is not the seedling mat replenishment mode (Step S33: NO), that is, in a case where replenishment of seedling mats M has been performed and the seedling mat replenishment mode has already been canceled, the automatic traveling control unit 51 proceeds to Step S18.

In Step S18, in a case where the automatic traveling starting condition is not satisfied or the automatic traveling starting switch is not operated (Step S18: YES), the automatic traveling control unit 51 returns to Step S31. In a case where the automatic traveling starting condition is satisfied and the automatic traveling starting switch is operated in Step S18 (Step S18: YES), the automatic traveling control unit 51 re-starts the automatic traveling of the transplanter 1 (Step S19). When the automatic traveling of the transplanter 1 is re-started, the automatic traveling control unit 51 returns to Step S12.

According to the fourth embodiment, in a case where replenishment of seedling mats M is not performed although replenishment of seedling mats M is necessary, re-starting of automatic traveling is prohibited. Therefore, since automatic traveling on the second straight path P2 is not started in a state where the seedling mat remaining amount A is insufficient, it is possible to prevent occurrence of such a situation in which the seedling mat remaining amount A runs out during traveling on a straight path P.

The present invention is not limited to the embodiments explained above and can further be implemented in other forms.

Furthermore, the predetermined condition for the corrected route generation unit 111 to generate the corrected travel route R1 need not be based on comparison of the straight distance between the replenishment position B and the second start point SP2 and the straight distance between the replenishment position B and the second end point EP2 as in the above-described embodiments. That is, it is also possible that, unlike the present embodiments, the predetermined condition is that the moving distance for the agricultural work machine to travel from the replenishment position to the second end point EP2 is shorter than the moving distance for the agricultural work machine to travel from the replenishment position B to the second start point SP2.

Furthermore, there is such a case in which the planting work is performed in the peripheral area N after traveling on the travel route R. In this case, depending on the positional relationship between the route ending point EE and the entrance/exit (not illustrated in the drawings) of the field F, there may be a case where the total travel distance for the transplanter 1 in the field F can be shorten by not generating a corrected travel route R1. In such a case, the specific condition is that the second distance D2 is shorter than the first distance D1 and the travel distance for the transplanter 1 to perform the planting work in the peripheral area N is short.

Furthermore, it is also possible that the predetermined condition is whether or not the wireless communication terminal 100 is operated by the user. That is, it is also possible that the corrected route generation unit 111 is configured to generate the corrected travel route R1 or RP1 in a case where there is an operation by the user during the time after automatic traveling of the transplanter 1 is suspended and before the automatic traveling of the transplanter 1 is re-started.

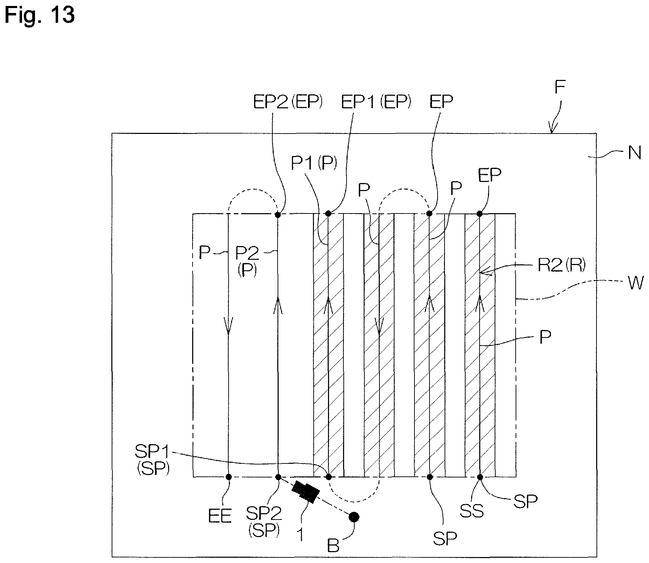

Furthermore, replenishment of seedling mats M can be performed twice or more during the time of traveling on the travel route R. In a case where replenishment is performed twice or more, the corrected route generation unit 111 determines whether or not to generate a corrected travel route, depending on whether or not the predetermined condition is satisfied, each time replenishment of seedling mats M is performed. Generation of a corrected travel route for the second time or later is performed based on the previous corrected travel route. For example, in a case where generation of a corrected travel route is performed twice, the secondarily-generated corrected travel route R2 illustrated in FIG. 13 is a route on which the start points SP and the end points EP of all the straight paths P on the downstream side relative to the first straight path P1 of the firstly-generated corrected travel route R1 (see FIG. 6C) are switched.

Furthermore, in the above-described embodiments, it is also possible that the wireless communication terminal 100 is attached to the transplanter 1.

Furthermore, in the above-described embodiments, it is assumed that the corrected route generation unit 111 is included in the control unit 101 of the wireless communication terminal 100. However, unlike the present embodiments, it is also possible that the corrected route generation unit 111 is not provided in the control unit 101 of the wireless communication terminal 100, and the control unit 4 of the transplanter 1 includes a corrected route generation unit.

In a case where the amounts of seedling mats M mounted before the start of traveling on the travel route R are the same on all the mounting surfaces of the seedling mounting table 22 and a planting work of eight rows is executed on all the straight paths P of the travel route R, the seedling mat remaining amounts A on all the mounting surfaces are to be almost the same. Therefore, there is no problem even though the automatic traveling suspending condition is that the seedling mat remaining amounts A on all the mounting surfaces are less than the predetermined threshold value α or the seedling mat consumption amount on the first straight path P1. However, the planting work of eight rows is not always executed on all the straight paths P of the travel route R, and a planting work of six rows, a planting work of four rows, or a planting work of two rows may be performed on a part of the straight paths P. In this case, it is possible that the seedling mat remaining amounts A on only a part of the mounting surfaces become less than the predetermined threshold value α (seedling mat consumption amount). Therefore, in such a case, it is necessary that whether or not the seedling mat remaining amount A is less than the predetermined threshold value α (seedling mat consumption amount) is determined for each mounting surface (for each seedling replenishment sensor 40).

In a case where whether or not the seedling mat remaining amount A is less than the predetermined threshold value α (seedling mat consumption amount) is determined for each mounting surface (for each seedling replenishment sensor 40), the seedling mat remaining amounts A on the mounting surfaces corresponding to the planting units 21 that are operating during the travel on the first straight path P1 are to be the targets of determination, and the seedling mat remaining amounts A on the mounting surfaces corresponding to the planting units 21 that are not operating during the travel on the first straight path P1 are to be out of the targets of determination.

In such a case where whether or not seedling replenishment is performed is determined based on comparison of whether the seedling mat remaining amount A is less than the seedling mat consumption amount and where a planting unit 21 that is not operating during the travel on the first straight path P1 is made to operate on the second straight path P2, the automatic traveling suspending condition is that the seedling mat remaining amount A is less than the seedling mat consumption amount on the straight path P on which the planting unit 21 was previously operating (a straight path P on which the transplanter 1 traveled prior to the first straight path P1). Therefore, the seedling mat remaining amount A on the mounting surface corresponding to a planting unit 21 that is made to operate for the first time on the second straight path P2 of the travel route R is to be out of the targets of determination.

Note that, needless to say, even in a case where a planting work of eight rows is always executed on all the straight paths P of the travel route R, it is possible that whether or not the seedling mat remaining amount A is less than the predetermined threshold value α (the seedling mat consumption amount) is determined for each mounting surface (for each seedling replenishment sensor 40).

Furthermore, in the second embodiment, it is assumed that the automatic traveling suspending condition is that the seedling mat remaining amount A is less than the predetermined threshold value α or that the seedling mat remaining amount A is less than the amount of seedling mats M consumed (the seedling mat consumption amount) on the first straight path P1. However, in a case where the seedling mat remaining amount Ais less than the predetermined threshold value α or in a case where the seedling mat remaining amount A is less than the amount of seedling mats M consumed (the seedling mat consumption amount) on the first straight path P1, it is also possible that the operation display unit 103 of the wireless communication terminal 100 is controlled to display a warning without suspending the automatic traveling. That is, it can be a warning executing condition that the seedling mat remaining amount A is less than the predetermined threshold value α or that the seedling mat remaining amount A is less than the amount of seedling mats M consumed (the seedling mat consumption amount) on the first straight path P1.

In this case, it is possible for the user to operate the operation display unit 103 to suspend the automatic traveling after recognizing that replenishment of seedling mats M is necessary from the warning. Thereafter, the user can move the transplanter 1 to the replenishment position by manual traveling.

In the explanations of the above-described embodiments, a transplanter is taken as an example of the agricultural work machine. The agricultural work machine is not limited to a transplanter and may be a vehicle such as another agricultural work machine that supplies a supply material other than a seedling mat M to the field F.

In addition, although the case where a supply material is supplied to the field F is explained in the above-described embodiments, it is also possible that the above-described embodiments are applied to an agricultural work machine such as a combine that harvests an agricultural product from the field F while traveling on the travel route R and unloads the agricultural product at a predetermined unloading position. A combine includes a crop storage unit that stores the agricultural products (for example, rice) harvested from the field F, so as to store the crops harvested while traveling on the straight paths P of the travel route R in the crop storage unit.

It is also possible for such a combine to travel in the same manner as the transplanter 1 of the above-described embodiments (see FIG. 6A through FIG. 6C, FIG. 9A, and FIG. 9B), and the same control as that of the transplanter 1 is performed (see FIG. 7 and FIG. 10).

However, the difference from the transplanter 1 is mainly as described below. For example, when moving the combine from the first end point EP1 toward the unloading position, it is necessary that the combine heads to the unloading position through an area where agricultural products have already harvested in the field F, so as not to damage the agricultural products in the field F. Furthermore, in a case where a combine is configured to automatically travel in both of a case where the combine is positioned on a straight path P and a case where the combine is positioned on a turning path T, if the combine travels on a straight path P and reaches the first end point EP1, whether or not it is possible to harvest the agricultural products on the next straight path P is determined by an automatic traveling control unit included in the combine, based on the maximum capacity of the crop storage unit and the amount of harvested agricultural products (the stored amount in the crop storage unit). In a case where the automatic traveling control unit determines that it is not possible to harvest the agricultural products, the automatic traveling control unit suspends the automatic traveling. After the automatic traveling is suspended, when it is detected that the agricultural products are unloaded from the crop storage unit and the automatic traveling is started, a corrected route generation unit included in the combine generates the corrected travel route R1 in a case where the first distance D1 is longer than the second distance D2.

Note that, whether or not it is possible to harvest the agricultural products on the next straight path P is determined by whether or not the remaining amount of the crop storage unit, which is calculated based on the maximum capacity of the crop storage unit and the amount of the harvested agricultural products, is equal to or less than a predetermined capacity or by whether or not the remaining amount is less than the amount of crops harvested in the previous procedure.

Although the embodiments of the present invention have been explained in detail, these are merely specific examples used for clarifying the technical contents of the present invention, and the interpretation of the present invention should not be limited to these specific examples, and the scope of the present invention is limited only by the accompanying Claims.

The present application corresponds to Japanese Patent Application No. 2018-48449 filed with the Japan Patent Office on March 15, 2018, and the entire disclosure of the present application is incorporated herein by reference.

### DESCRIPTION OF REFERENCE NUMERALS

- 1: transplanter (automatic traveling system)
- 51: automatic traveling control unit
- 100: wireless communication terminal (automatic traveling system)
- 111: corrected route generation unit
- A: seedling mat remaining amount
- B: replenishment position
- D1: first distance
- D2: second distance
- EP1: first end point
- EP2: second end point
- P1: first straight path (first path)
- P2: second straight path (second path)
- R: travel route
- R: initial travel route
- R1: corrected travel route
- RP: travel route
- RP0: initial travel route
- RP1:: corrected travel route
- SP1:: first start point
- SP2:: second start point
- T:: turning path
- α:: threshold value

## Claims

1. An automatic traveling system for causing an agricultural work machine to automatically travel a first path and a second path in sequence, the agricultural work machine being configured to supply a supply material to the first path and the second path while traveling along a travel route that is set in a field and includes the first path formed by connecting a first start point and a first end point, and the second path formed by connecting a second start point and a second end point, the automatic traveling system comprising:
a corrected route generation unit configured to generate a corrected travel route, on which the second start point and the second end point are switched, in a case where a predetermined condition is satisfied, after automatic traveling of the agricultural work machine is suspended, prior to entrance into the second path, and before the automatic traveling of the agricultural work machine is re-started for the second path.

2. The automatic traveling system according to claim 1, wherein the predetermined condition is that a distance between a replenishment position, at which the agricultural work machine is replenished with the supply material, and the second end point is shorter than a distance between the replenishment position and the second start point.

3. The automatic traveling system according to claim 1 or 2, further comprising an automatic traveling control unit configured to cause the agricultural work machine to automatically travel on the first path and the second path,
wherein, in a case where the agricultural work machine reaches the first end point, the automatic traveling control unit suspends the automatic traveling of the agricultural work machine.

4. The automatic traveling system according to claim 1 or 2, further comprising an automatic traveling control unit configured to cause the agricultural work machine to automatically travel on the first path and the second path,
wherein, in a case where an amount of the supply material remaining on the agricultural work machine when the agricultural work machine reaches the first end point is less than a predetermined threshold value, the automatic traveling control unit suspends the automatic traveling of the agricultural work machine.

5. The automatic traveling system according to claim 1 or 2, further comprising an automatic traveling control unit configured to cause the agricultural work machine to automatically travel on the first path and the second path,
wherein, in a case where an amount of the supply material remaining on the agricultural work machine is less than an amount of the supply material consumed on the first path, the automatic traveling control unit suspends the automatic traveling of the agricultural work machine.

6. An automatic traveling system for causing an agricultural work machine to automatically travel a first path and a second path in sequence, the agricultural work machine being configured to harvest an agricultural product on the first path and the second path while traveling along a travel route that is set in a field and includes the first path formed by connecting a first start point and a first end point and the second path formed by connecting a second start point and a second end point, the automatic traveling system comprising:
a corrected route generation unit configured to generate a corrected travel route, on which the second start point and the second end point are switched, in a case where a predetermined condition is satisfied, after automatic traveling of the agricultural work machine is suspended, prior to entrance into the second path, and before the automatic traveling of the agricultural work machine is re-started for the second path.
